# EUROPÄISCHE PATENTSCHRIFT

(11) **EP 2 277 419 B1**
(45) Veröffentlichungstag und Bekanntmachung des Hinweises auf die Patenterteilung: **07.08.2013**
(21) Anmeldenummer: 10165780.7
(22) Anmeldetag: 14.06.2010
(51) Int. Cl.: A47J 31/44, A47J 31/60, A47J 31/46

(54) **Getränkeautomat**
Drinks machine
Automate à boissons

(30) Priorität: 23.07.2009 DE 102009034234
(43) Veröffentlichungstag der Anmeldung: 26.01.2011
(73) Patentinhaber: WMF Württembergische Metallwarenfabrik AG, 73309 Geislingen/Steige (DE)
(72) Erfinder: Göltenboth, Frank, 89134 Blaustein (DE)
(74) Vertreter: BRP Renaud & Partner

(56) Entgegenhaltungen:
- EP-A1- 1 561 407
- EP-A1- 1 656 863
- EP-A1- 1 797 801

## Beschreibung

Die vorliegende Erfindung betrifft einen Getränkeautomaten mit einer Einrichtung zum Erzeugen von Milchschaum und/oder erhitzter Milch gemäß dem Oberbegriff des Anspruchs 1.

Ein gattungsgemäßer Getränkeautomat ist bspw. aus der WO 2005/102126 A2 bekannt. Bei dem bekannten Getränkeautomaten wird zur Erzeugung von Milchschaum ein Milchbehälter mit dem Getränkeautomaten gekoppelt und durch Ausstoßen von Dampf Milch aus dem Milchbehälter angesaugt. Dabei erfolgt eine Ausgabe von Milchschaum separat zur Ausgabe von Kaffee und insbesondere nicht gleichzeitig mit dieser.

Aus der EP 1 688 074 B1 ist eine Anordnung zur Erzeugung von Milchschaum und zum Erzeugen von Milch bekannt, mit einer Schäumvorrichtung, welche mit einem Dampfzuführkanal, einem Lufteinlass, einem Milchzuführkanal sowie einer Abgabeöffnung versehen ist. Durch das Vorsehen eines Entlüftungskanals, mittels welchem die Schäumvorrichtung nach dem Erzeugen von Milchschaum oder dem Erhitzen von Milch entlüftet werden kann, sowie einer Ventilanordnung, mittels welcher der Entlüftungskanal und/oder der Lufteinlasskanal in Abhängigkeit der gewünschten Betriebsart verschließbar ist, soll ein schnelles Abfließen von in der Schäumvorrichtung sich noch befindlicher Milch nach dem Erzeugen des Milchschaums bzw. dem Erhitzen der Milch erreicht werden.

Schließlich ist aus der DE 44 45 436 C2 eine Aufschäumvorrichtung zum Aufschäumen von Milch mit einer Zuleitung für Dampf, einer Zuleitung für Luft und einer Zuleitung für Milch sowie einem Mischbereich bekannt, in welchem die Zuleitungen zusammengeführt werden. Die Zuleitung für die Luft ist dabei mit einer Druckluftquelle zum Einblasen der Luft verbunden, wobei dieses Einblasen der Luft steuerbar ist. Hierdurch sollen insbesondere die Aufschäumeigenschaften verbessert werden.

Aus der EP 1 561 407 A1 ist ein Getränkeautomat mit einer Einrichtung zum Erzeugen von Milchschaum und/oder erhitzter Milch bekannt, wobei die Einrichtung zumindest einen Milchzuführkanal und einen Dampfzuführkanal aufweist, die in einen Misch-/Schäumbereich münden. Darüber hinaus ist ein Leitungselement vorgesehen, welches einenends kommunizierend mit dem Milchzuführkanal und anderenends mit einem Behälter für Milch verbunden ist. Die Verbindung zwischen dem Leitungselement und dem Ventilkörper ist jedoch nicht entkoppelbar.

Aus der EP 1 797 801 A1 ist ebenfalls ein Getränkeautomat mit einer Einrichtung zum Erzeugen von Milchschaum und/oder erhitzter Milch bekannt, die zumindest einen Milchzuführkanal und einen Dampfzuführkanal aufweist, die in einen Misch-/Schäumbereich münden.

Schließlich ist aus der EP 1 656 863 A1 ein Getränkeautomat mit einer Einrichtung zum Erzeugen von Milchschaum bekannt.

Die vorliegende Erfindung beschäftigt sich mit dem Problem, für einen Getränkeautomaten der gattungsgemäßen Art, eine verbesserte Ausführungsform anzugeben, welche eine vereinfachte Methode zur Spülung und damit zur Sicherstellung der Betriebshygiene bietet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einem Getränkeautomaten mit einer Einrichtung zum Erzeugen von Milchschaum und/oder erhitzter Milch, ein Leitungselement vorzusehen, welches einen Ends im Bereich einer Koppelstelle kommunizierend mit einem in dem Getränkeautomaten angeordneten Milchzuführkanal und anderen Ends mit einem Behälter für Milch verbindbar ist. Darüber hinaus ist eine Spülleitung vorgesehen, welche direkt in die Koppelstelle mündet, so dass zumindest sämtliche mit Milch in Kontakt kommenden Leitungsteile außerhalb des Behälters für Milch, nämlich die Koppelstelle, der Milchzuführkanal und die Einrichtung gespült werden können. Die Spülleitung, welche in das Koppelelement mündet, hat die Aufgabe, sämtliche mit Milch in Berührung tretende Teile stromab der Koppelstelle bei Bedarf oder auf Aufforderung durch den Kunden zu spülen. Der erfindungsgemäße Getränkeautomat biete somit im Vergleich zu aus dem Stand der Technik bekannten den großen Vorteil, dass eine Ausgabe von Milchschaum und Kaffee an derselben Stelle erfolgt, wobei der Milchschaum und der Kaffee gleichzeitig zubereitet werden können. Der Behälter für die Milch kann dabei entweder extern, bspw. in Form eines Milchgetränkekartons ausgebildet sein oder aber einen in den Getränkeautomaten einschiebbaren Bestandteil bilden. Bei dem erfindungsgemäßen Getränkeautomat wird somit lediglich das Leitungselement über die Koppelstelle an den Milchzuführkanal angeschlossen und dadurch das Ansaugen von Milch aus dem Milchbehälter ermöglicht. Das Leitungselement kann dabei integraler Bestandteil des Milchbehälters oder seines Deckels sein und muss nicht (wie in den meisten Ständen der Technik) als Schlauch ausgeführt sein. Dies erlaubt einen relativ großen Querschnitt, welche dadurch auch bei Reinigung in einer Spülmaschine wirksam gereinigt werden kann. Die Mündung der Spülleitung in das Koppelelement ist dabei zusätzlich erfindungsgemäß als Venturigeometrie ausgebildet, welche derart dimensioniert ist, dass während des Spülvorgangs kein Spülwasser in das Leitungselement zurückfließt aber auch keine Milch angesaugt wird.

Bei einer vorteilhaften Weiterbildung der erfindungsgemäßen Lösung, weist das Leitungselement ein Ventil zur Vermeidung eines Rückflusses von Spülmedium in den Behälter auf. Dieses Ventil kann bspw. im Bereich der Koppelstelle zwischen dem Leitungselement und dem Milchzuführkanal angeordnet sein und ist vorzugsweise derart ausgebildet, dass sich das Ventil automatisch schließt, sofern das Leitungselement von der Koppelstelle abgenommen wird. Das Ventil kann dabei entweder steuerbar sein oder aber lediglich zwischen zwei Zuständen hin- und herschaltbar sein, wobei der eine Schaltzustand den geschlossenen Zustand des Ventils und der andere Schaltzustand den geöffneten Zustand des Ventils darstellt. Die beiden letzten Schaltzustände können bspw. durch ein einfaches Einstecken des Leitungselements in den Milchzuführkanal bzw. ein Abziehen des Leitungselements aus dem Milchzuführkanal bewirkt werden. Durch diese Anordnung ist eine sehr einfache Möglichkeit gegeben das Milchsystem hygienisch sauber zu halten: Der Milchbehälter nebst Ansaugleitung kann nach Abkopplung vom Getränkeautomaten in der Spülmaschine gereinigt werden, das am Automaten verbleibende Milchsystem kann über die Spülleitung automatisiert und hygienisch gereinigt werden.

Zweckmäßig ist der Milchzuführkanal Bestandteil der vorzugsweise entnehmbaren Einrichtung zum Erzeugen von Milchschaum und/oder erhitzter Milch. In diesem Fall ist es somit möglich, nicht nur den Milchzuführkanal, sondern zugleich mit diesem auch die Einrichtung zum Herstellen von Milchschaum vom Getränkeautomaten abzunehmen und bspw. zu reinigen.

Selbstverständlich verläuft dabei der Milchzuführkanal bei dem erfindungsgemäßen Getränkeautomaten zumindest teilweise innerhalb desselben.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen Getränkeautomaten mit einer Einrichtung zur Erzeugung von Milchschaum,
- Fig. 2a-e: jeweils einen Milchbehälter gemäß der Fig. 1 mit daran angeschlossene Leitungselement.

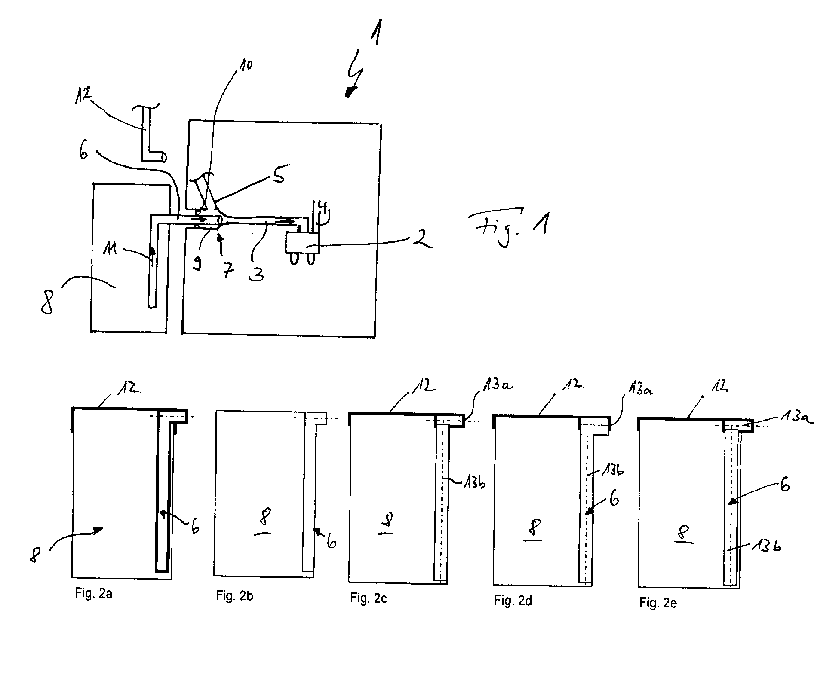

Entsprechend der Fig. 1, weist ein erfindungsgemäßer Getränkeautomat 1 eine Einrichtung 2 zum Erzeugen von Milchschaum und/oder erhitzter Milch auf. Die Einrichtung 2 ist dabei mit einem Milchzuführkanal 3 und mit einem Dampfzuführkanal 4 und über den Milchzuführkanal 3 mit einem Spülmediumkanal 5, im Folgenden auch Spülleitung 5 genannt, kommunizierend verbunden. Sowohl der Milchzuführkanal 3, als auch der Dampfzuführkanal 4 münden dabei in einen Misch-/Schäumbereich der Einrichtung 2. Erfindungsgemäß ist nun ein Leitungselement 6 vorgesehen, welches einen Ends im Bereich einer Koppelstelle 7 kommunizierend mit dem Milchzuführkanal 3 und anderen Ends mit einem Behälter 8 für Milch verbindbar ist. Im Bereich der Koppelstelle 7 kann darüber hinaus eine Venturigeometrie 9 vorgesehen sein.

Insbesondere im Bereich der Koppelstelle 7, d. h. im Bereich eines freien Endes des Leitungselements 6, kann ein Ventil 10 vorgesehen sein, welches in der Art eines Rückschlagventils ausgebildet ist und einen Rückfluss von Milch in den Behälter 8 zumindest erschwert. Das Ventil 10 kann dabei derart ausgebildet sein, dass es im geschlossenen Zustand ein Spülen der stromab gelegenen und mit Milch in Kontakt kommenden Bereiche ermöglicht, während es im geöffneten Zustand auch ein Spülen des stromauf des Ventils 10 gelegenen Leitungselements 6 erlaubt. Die im Normalbetrieb herrschende Strömungsrichtung innerhalb des Leitungselements 6 ist dabei mit Strömungspfeilen 11 dargestellt. Selbstverständlich kann dabei auch das Ventil 10 selbst beim Abnehmen des Leitungselementes 6 vom Getränkeautomaten 1 automatisch schließen. Ebenfalls denkbar ist, dass das Ventil 10 als Lippenventil, als Dichtring oder als andersartiges Dichtelement ausgebildet ist.

Von besonderem Vorteil bei dem erfindungsgemäßen Getränkeautomaten 1 ist, dass der Behälter 8 zusammen mit dem Leitungselement 6 abgenommen und getrennt, beispielsweise in einer Spülmaschine, gereinigt werden kann. Die in dem Getränkeautomaten 1 selbst liegenden und mit Milch in Berührung kommenden Teile, wie beispielsweise die Einrichtung 2 und der Milchzuführkanal 3 können dagegen leicht über die Spülleitung 5 gereinigt werden. Der insbesondere für das Leitungselement 6 verwendete Querschnitt ist darüber hinaus so groß, dass dieser einer Reinigung in der Spülmaschine leicht zugänglich ist. Selbstverständlich ist es auch vorstellbar, dass eine externe Spülleitung 12 zur Reinigung der Einrichtung 2 und des Milchzuführkanals 3 an den Getränkeautomaten 1 angeschlossen werden kann.

Gemäß den Fig. 2a bis 2e sind nun verschiedene mögliche Ausführungsformen für den Behälter 8 und das zugehörige Leitungselement 6 dargestellt. Bei dem Behälter 8 gemäß der Fig. 2a ist das Leitungselement 6 Bestandteil eines Behälterdeckels 12, das heißt zusammen mit diesem abnehmbar und zu reinigen. Bei dem Behälter 8 gemäß der Fig. 2b hingegen ist das Leitungselement 6 Bestandteil des Behälters 8 selbst.

Bei dem Behälter 8 gemäß den Fig. 2c und 2d wiederum ist das Leitungselement 6 zweiteilig aufgebaut. Hierbei ist jeweils ein Teil 13a des Leitungselementes 6 Bestandteil des Behälterdeckels 12 und der andere Teil 13b des Leitungselementes 6 Bestandteil des Behälters 8, wobei beide Teile 13a und 13b des Leitungselementes 6 dicht miteinander koppelbar sind.

Bei dem Behälter 8 gemäß der Fig. 2e ist das Leitungselement 6 ebenfalls zweiteilig aufgebaut, wobei es Bestandteil des Behälterdeckels 12 ist. Zugleich ist jedoch zumindest der Teil 13b des Leitungselementes 6 vom Behälterdeckel 12 abnehmbar und kann separat zu diesem gereinigt werden.

## Patentansprüche

1. Getränkeautomat (1) mit einer Einrichtung (2) zum Erzeugen von Milchschaum und/oder erhitzter Milch, wobei die Einrichtung (2) zumindest einen Milchzuführkanal (3) und einen Dampfzuführkanal (4) aufweist, die in einen Misch-/Schäumbereich münden, wobei eine Spülleitung (5) vorgesehen ist, welche direkt in eine Koppelstelle (7) mündet, so dass zumindest sämtliche mit Milch in Kontakt kommenden Leitungsteile außerhalb des Behälters (8) für Milch, nämlich die Koppelstelle (7), der Milchzuführkanal (3) und die Einrichtung (2) gespült werden können, **dadurch gekennzeichnet,**
- **dass** ein Leitungselement (6) vorgesehen ist, welches einen Ends im Bereich der Koppelstelle (7) kommunizierend mit dem Milchzuführkanal (3) und anderen Ends mit einem Behälter (8) für Milch verbindbar ist,
- **dass** die Mündung der Spülleitung (5) in das Koppelelement (7) als Venturigeometrie ausgebildet ist, welche derart dimensioniert ist, dass während des Spülvorgangs kein Spülwasser in das Leitungselement (6) zurückfließt aber auch keine Milch angesaugt wird.

2. Getränkeautomat nach Anspruch 1,
**dadurch gekennzeichnet,**
- **dass** das Leitungselement (6) ein Ventil (10) zur Vermeidung eines Rückflusses von Spülmedium in den Behälter (8) aufweist, oder
- **dass** die Koppelstelle (7) ein Ventil (10) aufweist, welches den Rückfluss von Spülmedium in das Leitungselement (6) verhindert, oder
- **dass** die Koppelstelle (7) ein Ventil (10) aufweist, welches bei Abwesenheit des Leitungselements (6) den Austritt von Spülmedium aus der Koppelstelle (7) verhindert.

3. Getränkeautomat nach Anspruch 2,
**dadurch gekennzeichnet,**
**dass** das Ventil (10) derart ausgebildet ist, dass es in geschlossenem Zustand ein Spülen der stromab gelegenen und mit Milch in Kontakt kommenden Bereiche ermöglicht, während es in geöffnetem Zustand zusätzlich ein Spülen des stromauf des Ventils (10) gelegenen Leitungselementes (6) erlaubt.

4. Getränkeautomat nach einem der Ansprüche 2 bis 3,
**dadurch gekennzeichnet,**
**dass** das Ventil (10) beim Abnehmen des Leitungselementes (6) automatisch schließt.

5. Getränkeautomat nach einem der Ansprüche 2 bis 4,
**dadurch gekennzeichnet,**
**dass** das Ventil (10) als Lippenventil ausgebildet ist.

6. Getränkeautomat nach einem der Ansprüche 1 bis 5,
**dadurch gekennzeichnet,**
**dass** eine Erkennungseinrichtung vorgesehen ist, welche erkennen kann, ob das Leitungselement (6) angekoppelt ist oder nicht.

7. Getränkeautomat nach einem der Ansprüche 1 bis 6,
**dadurch gekennzeichnet,**
**dass** der Getränkeautomat derart ausgebildet ist, dass das Abkoppeln des Leitungselements (6) automatisch einen Spülvorgang auslöst.

8. Getränkeautomat nach einem der Ansprüche 1 bis 7,
**dadurch gekennzeichnet,**
**dass** der Milchzuführkanal (3) Bestandteil der vorzugsweise entnehmbaren Einrichtung (2) zum Erzeugen von Milchschaum und/oder erhitzter Milch ist.

9. Getränkeautomat nach einem der Ansprüche 1 bis 8,
**dadurch gekennzeichnet,**
**dass** das Leitungselement (6) Bestandteil des Behälters (8) für Milch ist und derart gestaltet ist, dass es gemeinsam mit diesem in einer Spülmaschine reinigbar ist.

## Claims

1. A drinks machine (1) with a means (2) for producing frothy milk and/or heated milk, wherein the means (2) has at least one milk supply duct (3) and a steam supply duct (4) which open into a mixing/frothing region, whereby a rinsing line (5) is provided which opens directly into the coupling point (7), so that at least all the line parts which come into contact with milk outside the container (8) for milk, namely the coupling point (7), the milk supply duct (3) and the means (2), can be rinsed,
**characterised in that**
- a line element (6) is provided which can be connected at one end in the region of a coupling point (7) in a communicating manner to the milk supply duct (3) and at the other end to a container (8) for milk,
- the opening of the rinsing line (5) into the coupling element (7) is configured as a Venturi geometry which is dimensioned in such a manner that no rinsing water flows back into the line element (6) and no milk is sucked out during the rinsing process.

2. The drinks machine according to Claim 1,
**characterised in that**
- the line element (6) has a valve (10) for preventing backflow of rinsing medium into the container (8), or
- the coupling point (7) has a valve (10) which prevents backflow of rinsing medium into the line element (6), or
- the coupling point (7) has a valve (10) which prevents rinsing medium from exiting from the coupling point (7) in the absence of the line element (6).

3. The drinks machine according to Claim 2,
**characterised in that**
the valve (10) can be configured in such a manner that it makes it possible to rinse the regions which lie downstream and comes into contact with milk when in the closed state, while also allowing the line element (6) which lies upstream of the valve (10) to be rinsed when in the open state.

4. The drinks machine according to one of Claims 2 or 3,
**characterised in that**
the valve (10) closes automatically when the line element (6) is removed.

5. The drinks machine according to one of Claims 2 to 4,
**characterised in that**
the valve (10) is configured as a duckbill valve.

6. The drinks machine according to one of Claims 1 to 5,
**characterised in that**
a detection means is provided which can detect whether the line element (6) is coupled or not.

7. The drinks machine according to one of Claims 1 to 6,
**characterised in that**
the drinks machine is configured in such a manner that detaching the line element (6) automatically triggers a rinsing operation.

8. The drinks machine according to one of Claims 1 to 7,
**characterised in that**
the milk supply duct (3) is part of the preferably removable means (2) for producing frothy milk and/or heated milk.

9. The drinks machine according to one of Claims 1 to 8,
**characterised in that**
the line element (6) is part of the container (8) for milk and is designed in such a manner that it can be cleaned together with the latter in a dishwasher.

## Revendications

1. Distributeur de boissons (1) avec un système (2) pour créer de la mousse de lait et/ou du lait chauffé, le système (2) comportant au moins un canal d'alimentation de lait (3) et un canal d'alimentation de vapeur (4) qui débouchent dans une zone de mélange/de production de mousse, un conduit de lavage (5) étant prévu, lequel débouche directement dans une zone de couplage (7), de sorte à pouvoir laver au moins toutes les zones de conduit en contact avec du lait, hors du réservoir (8) pour le lait, à savoir la zone de couplage (7), le canal d'alimentation de lait (3) et le système (2), **caractérisé**
- **en ce qu'**il est prévu un élément de conduit (6), qui peut être relié par une extrémité dans la région de la zone de couplage (7), de manière à communiquer avec le canal d'alimentation de lait (3) et par l'autre extrémité avec un réservoir (8) pour le lait,
- **en ce que** l'embouchure du conduit de lavage (5) dans l'élément de couplage (7) est conçu avec la géométrie d'un tube de Venturi, lequel et dimensionné de sorte à ce que pendant le processus de lavage, aucune eau de lavage ne reflue dans l'élément de conduit (6), mais également qu'aucun lait ne soit aspiré.

2. Distributeur de boissons selon la revendication 1, **caractérisé**
- **en ce que** l'élément de conduit (6) comporte une soupape (10) pour éviter un reflux de fluide de lavage dans le réservoir (8) ou
- **en ce que** la zone de couplage (7) comporte une soupape (10), laquelle empêche le reflux de fluide de lavage dans l'élément de conduit (6) ou
- **en ce que** la zone de couplage (7) comporte une soupape (10), laquelle en l'absence de l'élément de conduit (6) empêche la sortie de fluide de lavage hors de la zone de couplage (7).

3. Distributeur de boissons selon la revendication 2, **caractérisé en ce que** la soupape (10) est conçue de sorte qu'en position fermée, elle permette un lavage des régions situées en aval et entrant en contact avec du lait, alors qu'en position ouverte, elle permet en supplément un lavage de l'élément de conduit (6) situé en amont de la soupape (10).

4. Distributeur de boissons selon l'une quelconque des revendications 2 et 3, **caractérisé en ce que** lors du retrait de l'élément de conduit (6), la soupape (10) se ferme automatiquement.

5. Distributeur de boissons selon l'une quelconque des revendications 2 à 4, **caractérisé en ce que** la soupape (10) est conçue en tant que soupape à bec.

6. Distributeur de boissons selon l'une quelconque des revendications 1 à 5, **caractérisé en ce qu'**il est prévu un système de détection, lequel peut détecter si l'élément de conduit (6) est couplé ou non.

7. Distributeur de boissons selon l'une quelconque des revendications 1 à 6, **caractérisé en ce que** le distributeur de boissons est conçu de sorte que le découplage de l'élément de conduit (6) déclenche automatiquement un processus de lavage.

8. Distributeur de boissons selon l'une quelconque des revendications 1 à 7, **caractérisé en ce que** le canal d'alimentation de lait (3) est une partie intégrante du système (2) de préférence amovible pour la création de mousse de lait et/ou de lait chauffé.

9. Distributeur de boissons selon l'une quelconque des revendications 1 à 8, **caractérisé en ce que** l'élément de conduit (6) est une partie intégrante du réservoir (8) pour le lait et est conçu de sorte à être lavable avec ce dernier dans un lave-vaisselle.
